# EUROPEAN PATENT SPECIFICATION

(11) **EP 3 046 106 B1**
(45) Date of publication and mention of the grant of the patent: **02.05.2018**
(21) Application number: 15202514.4
(22) Date of filing: 23.12.2015
(51) Int. Cl.: G11B 3/60, A63J 17/00

(54) **CONTROLLING MULTIPLE LIGHT SOURCES ILLUMINATING MARKS ON A TURNTABLE RIM FOR STROBOSCOPIC OR VISUAL EFFECTS.**
KONTROLLE VON MEHREREN LICHTQUELLEN ZUR BELEUCHTUNG VON MARKIERUNGEN AUF EINEM PLATTENSPIELERRAND FÜR STROBOSKOPISCHE ODER VISUELLE EFFEKTE.
CONTRÔLE DE MULTIPLES SOURCES DE LUMIÈRE POUR ILLUMINATION DE LA JANTE D'UN PLATEAU TOURNE- DISQUE POUR EFFETS STROBOSCOPIQUES OU VISUELS.

(30) Priority: 31.12.2014 US 201462098921 P
(43) Date of publication of application: 20.07.2016
(73) Proprietor: Gibson Brands, Inc., Nashville, TN 37217 (US)
(72) Inventor: Jursch, Gustave, Agoura Hills, CA 91301 (US)
(74) Representative: dompatent von Kreisler Selting Werner - Partnerschaft von Patent- und Rechtsanwälten mbB

(56) References cited:
- CN-Y- 2 840 258
- JP-U- S5 357 803
- JP-U- S5 887 176
- US-A- 4 225 227
- US-A1- 2014 085 072

## Description

### FIELD OF THE INVENTION

This disclosure is directed toward lighted turntable and controller visual display. More specifically to providing a lighting source around substantially the entire peripheral edge of the rotatable platter to provide a visual display.

### BACKGROUND

Typical turntable and controller assemblies use a single light source positioned on a side of a rotatable platter to illuminate a small portion of the platter's edge. The light source is typically a strobe light and the illumination is strictly limited to timing or otherwise correcting the phase of the platter rotational velocity relative to a desired or required platter rotational velocity. CN2840258 defines a turntable with a peripheric ring of light changing colour or flashing according to the beat of music. Light is emitted directly from the periphery of the apparatus.

### SUMMARY

In an example embodiment, a lighted turntable display is provided. The turntable includes a housing and a rotatable platter supported by the housing. The platter defining an outer peripheral surface. A plurality of reflective nodes are positioned on the outer peripheral surface. Additionally, a plurality of light sources configured to direct light directly toward the nodes to provide a visual light display.

In another example embodiment, a system for providing a visual display, is provided. The system include a turntable having a housing and a platter, the platter defining an outer periphery. A plurality of reflective nodes are positioned on the outer periphery. A plurality of light sources for directing light directly at the reflective nodes around substantially the entire outer periphery.

In still another example embodiment, a method of providing a visual display, is provided. The method includes providing a turntable having a rotatable platter defining an outer periphery having reflective nodes thereon. Additionally, providing a plurality of light sources for providing a light directly into the reflective nodes. Also, controlling the light sources to provide a visual display by the light reflected off the reflective nodes.

Other principal features of the current disclosure will become apparent to those skilled in the art upon review of the following drawings, the detailed description, and the appended claims.

### BRIEF DESCRIPTION OF THE DRAWINGS

Illustrative embodiments will be described referring to the accompanying drawings, wherein like numerals denote like elements.
Fig. 1 depicts a top view of a system diagram of a turntable system in accordance with an illustrative embodiment.
Fig. 2 depicts a top view of a system diagram of a controller system in accordance with an illustrative embodiment.
Fig. 3 depicts a first side view of the turntable system device in accordance with an illustrative embodiment.
Fig. 4 depicts a second side view of the turntable system device in accordance with an example not belonging to the present invention.
Fig. 5 depicts a flow diagram illustrating example operations performed by a lighted turntable device of the sound system of Figs. 1 and 2 in accordance with an illustrative embodiment.
Fig. 6 depicts a flow diagram illustrating example operations performed by a lighted turntable device of the sound system of Figs. 1 and 2 in accordance with an example.

### DETAILED DESCRIPTION

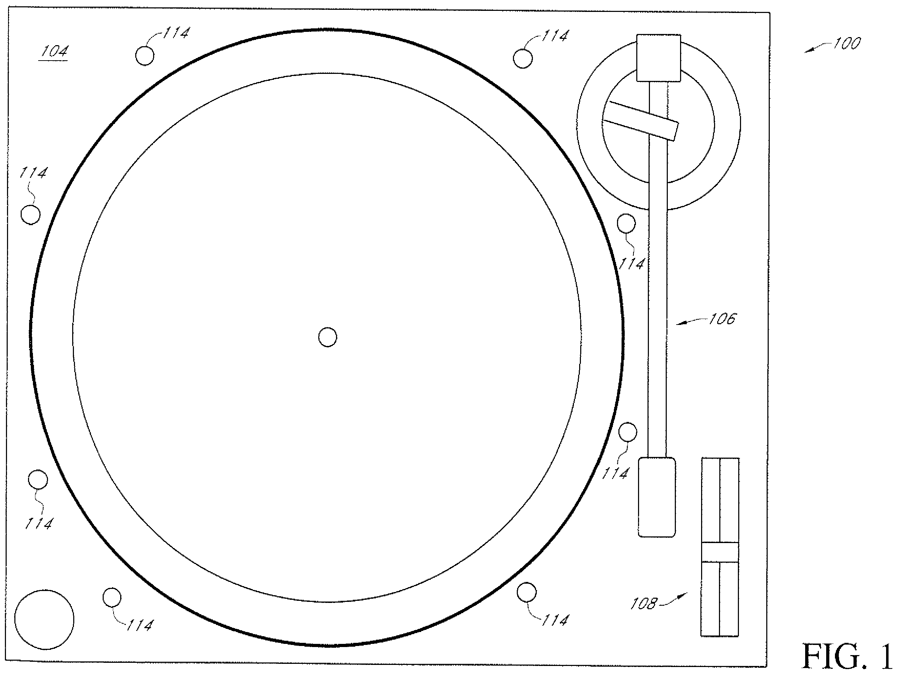

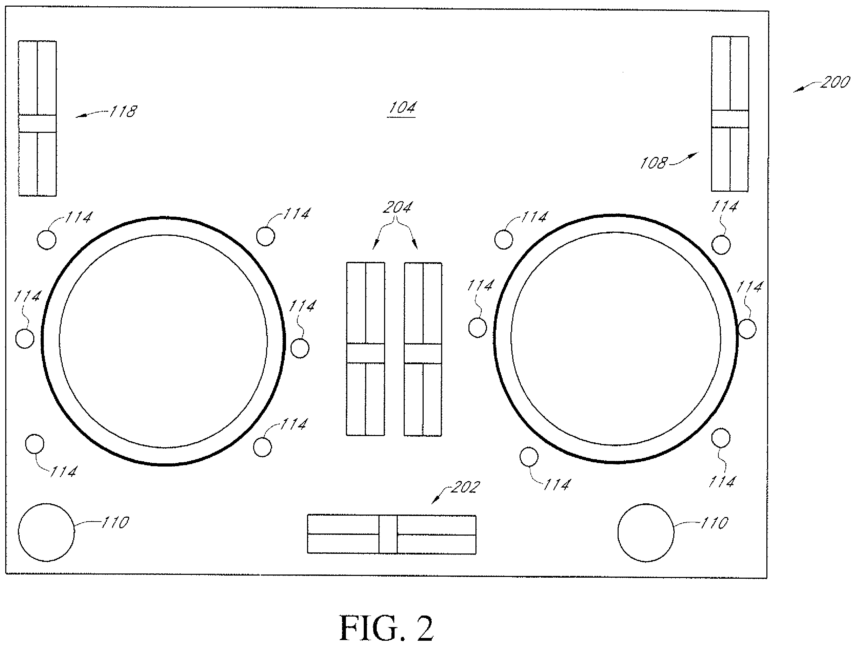

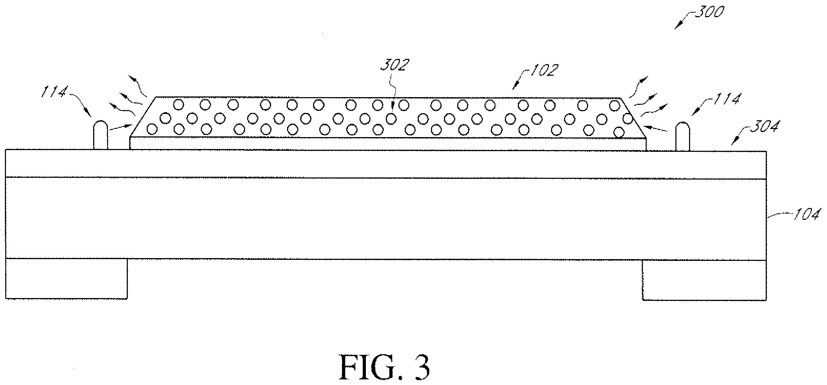

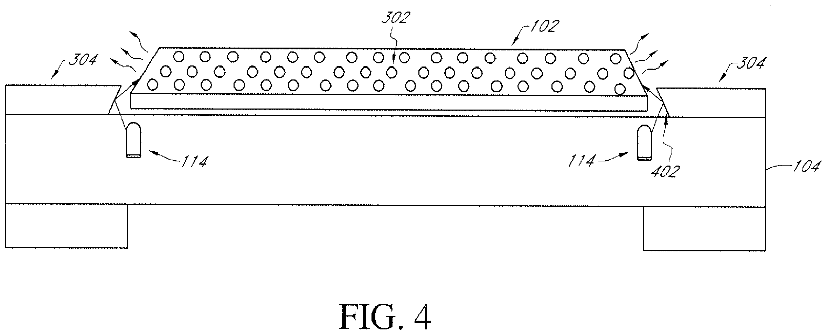

Referring to Figs. 1 and 2, a diagram of an audio system 100/200 is shown in accordance with an illustrative embodiment. In an illustrative embodiment, turntable system 100 may include a rotatable platter 102, a housing 104, a tone arm 106, light 114 and light controller 120. In the illustrative embodiment, audio system 100 is a turntable. Audio system 100/200 may also be a controller 200 such as those used to "scratch" music or otherwise manipulate the rotating platter 102 while in use. The audio system 100/200 may include other such features as pitch faders 108, various controls 110, cross fader 116/202, line faders 118/204, etc. In the illustrative embodiment, platter 102 includes a variety of reflective nodes 302 on the platter outer peripheral surface (Figs. 3&4). The light 114, light controller 120 and nodes 302 are configured to reflect light off the nodes 302 in a desired manner to produce a visual display from the audio system 100/200.

The word "illustrative" is used herein to mean serving as an example, instance, or illustration. Any aspect or design described herein as "illustrative" is not necessarily to be construed as preferred or advantageous over other aspects or designs. Further, for the purposes of this disclosure and unless otherwise specified, "a" or "an" means "one or more". Still further, using "and" or "or" is intended to include "and/or" unless specifically indicated otherwise. The illustrative embodiments may be implemented as a method, apparatus, or article of manufacture using standard programming and/or engineering techniques to produce software, firmware, hardware, or any combination thereof to create and control the disclosed embodiments. Additionally, like numbers refer to like parts.

With specific reference to Figs. 1 and 2, an illustrative depiction of the audio system 100/200 may be seen. As will be appreciated by those skilled in the art, the overall layout of the various component features is variable based on size and features of the specific audio system 100/200 employed. And as such, is not intended to limit the scope of this disclosure.

The lights 114 are positioned such that any desired amount of the platter's outer periphery may be illuminated. A user may select to not provide any light to the outer periphery or they may elect to illuminate the entire 360 degrees of the outer periphery, or any amount there between.

As depicted in the Figs., the lights 114 may be stand alone, discrete units. Such as, for example, individual light emitting diodes (LED's). Conversely, the lights 114, may be collection of light elements such as LED strings or other connected lights sources (not shown).

The lights 114 may be configured to produce a single type of light, such as white light. In addition, they may be configured to produce a variety of colored light such as red, blue and green. Likewise, each light 114 or light element in a string or other assortment (not shown) may be configured to produce a constant light source or a variable light source such as a strobe.

By way of non-limiting example, in one possible configuration, the audio system 100/200 may have multiple lights 114 positioned around the platter 102. All of the lights 114 may be configured to produce a constant white light. Conversely, they may all be configured to produce a white strobe light. Additionally, some or all of the lights 114 may be configured to produce a red light, a blue light and a green light. The various lights may be configured to produce constant or variable (strobe) colored light. Each light 114 may be configured and controlled independently from one another.

With reference to Figs. 3 and 4, further illustrative aspects are disclosed. The platter 102 is configured to rotate on the housing 104. The platter 102 supports an LP album (not shown) or the like for play via the tone arm 106 and other assemblies. Around the outer periphery of the platter 102 are positioned a plurality of nodes 302. In one exemplary embodiment, the nodes 302 are evenly spaced and positioned on the outer periphery. In another exemplary embodiment, the nodes 302 may not be evenly distributed on the outer periphery. They may be arranged in some predetermined pattern desired by a user.

The nodes 302 are configured to reflect light. One illustrative embodiment of the node material choice is that of reflective metal such as a machined metal, such as aluminum, surface. However, other material choices are available. By way of non-limiting example, certain ceramics may be used to form the nodes 302. Additionally, polymers that have light reflective properties may be used. Further, nodes 302 constructed from various silica material like glass (clear or colored) are within the scope of this disclosure. Those skilled in the art will appreciate other materials availability as well and material choice should not be limiting provided the material reflects light.

As best depicted in Fig. 3, another illustrative embodiment is disclosed. Particularly, in this exemplary embodiment, they lights 114 are positioned on an upper surface of the audio system's top plate 304 such that the lights 114 are substantially in the same plane as the platter 102. In this manner, the lights 114 shine directly into the nodes 302. It will be appreciated that the lights 114 may be slightly above the platter 102 or slightly below the platter 102 (although still above the top surface of the top plate 304) without departing the scope of the claims.

An alternative example not belonging to the invention is depicted best in Fig. 4. Here the lights are positioned in in plane below the top plate 304. In this manner, the top plate 304 has fewer elements on its surface. This slightly "cleaner" appearance may be desired by certain users.

In this example, an inner edge of the top plate 304 is configured with a reflective surface 402 thereby permitting the lights 114 to direct light at reflective surface 402 and it will be reflected toward and off of the nodes 302. Like the node 302, the material choice for the reflective surface 402 is light reflective such as mirror or mirrored surfaces of metal, ceramic, glass (clear or colored), or suitable polymers.

In use, either illustrative embodiment a user directs light of a desired quality, color and nature into the nodes 302. The light is then reflected back off the nodes 302 to the surrounding environment. As the platter 102 turns, the nodes 302 move respectively and a visual display is reflected outward toward viewers. In this manner, a visual display of varying nature is produced for viewers. This provides visual stimulation to accompany any audio stimulation produced by the audio system 100/200. An overall enhanced user experience is produced.

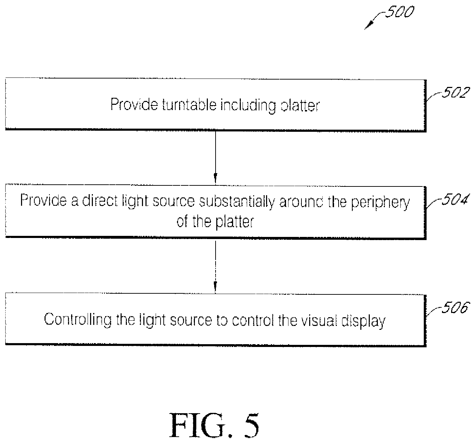

With particular reference to Fig. 5, an illustrative embodiment is depicted. Specifically, an exemplary method of direct lighting for a turntable display 500 is disclosed. At a block 502, an audio system 100/200 having a turntable with rotating platter is provided. Exemplary audio systems 100/200 are discussed and depicted herein. A direct light source substantially surrounding the outer periphery of the platter 102 is provided in a block 504. Additionally, controlling the lights 114 such that a desired display is produced in provided in a block 406.

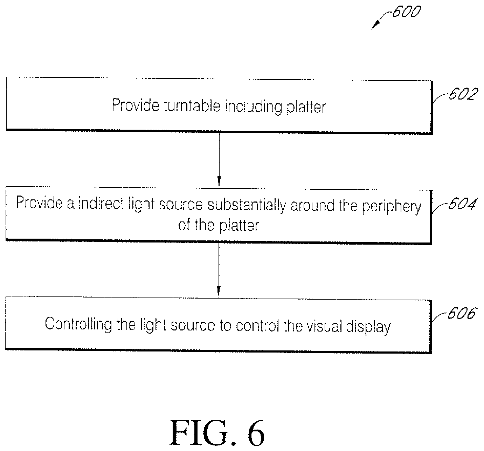

An additional illustrative embodiment is depicted in Fig. 6. In particular an exemplary method of indirectly lighting a turntable display 600 is depicted. At a block 602, an audio system 100/200 having a turntable with rotating platter 102 is provided. Exemplary audio systems 100/200 are discussed and depicted herein. An indirect light source substantially surrounding the outer periphery of the platter 102 is provided in a block 604. Additionally, controlling the indirect lights 114 such that a desired visual display is produced in provided in a block 606.

In an illustrative embodiment a lighted turntable display is disclosed. Included are a housing and a rotatable platter supported by the housing, the platter defining an outer peripheral surface. Also depicted are a plurality of reflective nodes positioned on the outer peripheral surface. Further, a plurality of light sources configured to direct light directly toward the nodes to provide a visual light display.

A further illustrative embodiment includes the reflective nodes are constructed from at least one of a reflective metal, glass, ceramic, and polymer.

A further illustrative embodiment includes controlling the plurality of light sources such that adjacent light sources are producing substantially the same type and quality of light.

A still further illustrative embodiment includes controlling the plurality of light sources such that adjacent light sources are producing substantially a different type or quality of light.

A further illustrative embodiment includes the different type or quality of light is at least one of a constant light source, strobe light source, white light source, or colored light source.

A further illustrative embodiment includes the colored light source is at least one of a red, green, or blue.

A further illustrative embodiment includes he plurality of light sources are light emitting diodes (LEDs).

A further illustrative embodiment includes a controller, the controller coupled to the light source for controlling the plurality of light sources, wherein the controller is configurable for producing different patterns of light from the plurality of light sources.

An illustrative embodiment includes a system for providing visual display. The system includes a turntable having a housing and a platter, the platter defining an outer periphery. Additionally, the system includes a plurality of reflective nodes on the outer periphery. Also included are a plurality of light sources for directing light directly at the reflective nodes around substantially all of the outer periphery.

A further illustrative embodiment includes a controller for controlling the plurality of light sources wherein the controller is configurable for producing different patterns of light from the plurality of light sources.

A further illustrative embodiment includes the plurality of light sources are configured to provide at least one of a white light, red light, green light, or blue light.

An illustrative embodiment includes a method of providing a visual display. The method includes providing a turntable having a rotatable platter defining an outer periphery having reflective nodes thereon. Additionally, the method incudes providing a plurality of light sources for providing a light directly into the reflective nodes. Also included in the method is controlling the light sources to provide a visual display by the light reflected off the reflective nodes.

A further illustrative embodiment includes providing a plurality of light sources is configured such that the plurality of light sources direct light at substantially all of the platter's outer periphery.

A further illustrative embodiment includes controlling the light sources includes each light source producing substantially the same light quality and color.

A further illustrative embodiment includes controlling the light sources includes each light source producing different light quality and color.

## Claims

1. A lighted turntable display, comprising:
a housing (104);
a rotatable platter (102) supported by the housing (104), the platter (102) defining an outer peripheral surface;
a plurality of reflective nodes (302) positioned on the outer peripheral surface; and,
a plurality of light sources (114) configured to direct light directly toward the nodes (302) to provide a visual light display,
further comprising a controller, the controller coupled to the light sources (114) for controlling the plurality of light sources, wherein the controller is configurable for producing different patterns of light from the plurality of light sources (114).

2. The display of claim 1, wherein the reflective nodes (302) are constructed from at least one of a reflective metal, glass, ceramic, and polymer.

3. The display of claim 1 or 2, further comprising controlling the plurality of light sources (114) such that adjacent light sources (114) are producing substantially the same type and quality of light.

4. The display of one of claims 1-3, further comprising controlling the plurality of light sources (114) such that adjacent light sources (114) are producing substantially a different type or quality of light.

5. The display of claim 4, wherein the different type or quality of light is at least one of a constant light, strobe light, white light and colored light.

6. The display of claim 5, wherein the colored light is at least one of a red, green, and blue light.

7. The display of one of claims 1-6, wherein the plurality of light sources (14) are light emitting diodes (LEDs).

8. A system for providing visual display, comprising:
a turntable (100) having a housing (104) and a platter, the platter defining an outer periphery;
a plurality of reflective nodes (302) on the outer periphery surface; and,
a plurality of light sources (114) for directing light directly at the reflective nodes (302) around substantially all of the outer periphery,
the system further comprising a controller for controlling the plurality of light sources (114) wherein the controller is configurable for producing different patterns of light from the plurality of light sources.

9. The system of claim 8, wherein the plurality of light sources (114) are configured to provide at least one of a white light, red light, green light, and blue light.

10. A method of providing a visual display, comprising:
providing a turntable (100) having a rotatable platter (102) defining an outer periphery having reflective nodes (302) thereon;
providing a plurality of light sources (114) directing light directly into the reflective nodes (302); and,
controlling the light sources (114) to produce different patterns of light from the plurality of light sources and to provide a visual display by the light reflected off the reflective nodes (302).

11. The method of Claim 10, wherein the providing a plurality of light sources (114) is configured such that the plurality of light sources (114) direct light at substantially all of the platter's outer periphery.

12. The method of claim 10 or 11, wherein controlling the light sources (114) includes each light source producing substantially the same light quality and color.

13. The method of one of claims 10 or 11, wherein controlling the light sources (114) includes each light source producing different light quality and color.

## Patentansprüche

1. Beleuchtete Plattenspieleranzeige mit:
einem Gehäuse (104);
einem von dem Gehäuse (104) gestützten drehbaren Plattenteller (102), wobei der Plattenteller (102) eine Außenumfangsfläche definiert;
mehreren reflektierenden Punkten (302), die an der Außenumfangsfläche angeordnet sind; und
mehreren Lichtquellen (114), die dazu ausgebildet sind, Licht unmittelbar in Richtung der Punkte (302) zu richten, um eine visuelle Lichtanzeige zu liefern,
ferner mit einer mit den Lichtquellen (114) gekoppelten Steuerung, um die mehreren Lichtquellen (114) steuerbar leuchten zu lassen, wobei die Steuerung zum Erzeugen unterschiedlicher Lichtmuster aus den mehreren Lichtquellen (114) konfigurierbar ist.

2. Anzeige nach Anspruch 1, bei welcher die reflektierenden Punkte (302) aus reflektierendem Metall und/oder Glas und/oder Keramik und/oder Polymer gebildet sind.

3. Anzeige nach Anspruch 1 oder 2, ferner mit dem Steuern der mehreren Lichtquellen (114) derart, dass benachbarte Lichtquellen (114) im Wesentlichen denselben Lichttyp und dieselbe Lichtqualität erzeugen.

4. Anzeige nach einem der Ansprüche 1 - 3, ferner mit dem Steuern der mehreren Lichtquellen (114) derart, dass benachbarte Lichtquellen (114) im Wesentlichen einen unterschiedlichen Lichttyp oder eine unterschiedliche Lichtqualität erzeugen.

5. Anzeige nach Anspruch 4, bei welcher der unterschiedliche Lichttyp oder die unterschiedliche Lichtqualität eine Dauerlichtquelle und/oder eine Stroboskoplichtquelle und/oder eine Weißlichtquelle und/oder eine Farblichtquelle ist.

6. Anzeige nach Anspruch 5, bei welcher die Farblichtquelle rot und/oder grün und/oder blau ist.

7. Anzeige nach einem der Ansprüche 1 - 6, bei welcher die mehreren Lichtquellen (114) Licht emittierende Dioden (LEDs) sind.

8. System zum Bereitstellen einer visuellen Anzeige, mit:
einem Plattenspieler (100) mit einem Gehäuse (104) und einem Plattenteller, wobei der Plattenteller eine Außenumfangsfläche definiert;
mehreren reflektierenden Punkten (302), die an der Außenumfangsfläche angeordnet sind; und
mehreren Lichtquellen (114), um Licht direkt in Richtung der reflektierenden Punkte (302) im Wesentlichen entlang des gesamten Außenumfangs zu richten,
wobei das System ferner eine Steuerung zum Steuern der mehreren Lichtquellen (114) aufweist, wobei die Steuerung zum Erzeugen unterschiedlicher Lichtmuster aus den mehreren Lichtquellen (114) konfigurierbar ist.

9. System nach Anspruch 8, bei welchem die mehreren Lichtquellen (114) dazu ausgebildet sind, weißes Licht und/oder rotes Licht und/oder grünes Licht und/oder blaues Licht zu liefern.

10. Verfahren zur Bereitstellung einer visuellen Anzeige, wobei das Verfahren die folgenden Schritte aufweist:
Bereitstellen eines Plattenspielers (100) mit einem drehbaren Plattenteller (102), wobei der Plattenteller einen Außenumfang mit daran befindlichen reflektierenden Punkten (302) aufweist;
Vorsehen mehrerer Lichtquellen (114), welche ein Licht direkt in die reflektierenden Punkte (302) richten; und
Steuern der Lichtquellen (114) zum Erzeugen unterschiedlicher Lichtmuster aus den mehreren Lichtquellen und zum Liefern einer visuellen Anzeige durch das von den reflektierenden Punkten (302) reflektierte Licht zu liefern.

11. Verfahren nach Anspruch 10, bei welchem das Vorsehen mehrerer Lichtquellen (114) derart erfolgt, dass die mehreren Lichtquellen (114) Licht auf im Wesentlichen den gesamten Außenumfang des Plattentellers richten.

12. Verfahren nach Anspruch 10 oder 11, bei welchem das Steuern der Lichtquellen (114) beinhaltet, dass jede Lichtquelle (114) im Wesentlichen denselben Lichttyp und dieselbe Farbe erzeugt.

13. Verfahren nach einem der Ansprüche 10 - 12, bei welchem das Steuern der Lichtquellen (114) beinhaltet, dass jede Lichtquelle einen unterschiedlichen Lichttyp und eine unterschiedliche Farbe erzeugt.

## Revendications

1. Afficheur de tourne-disque éclairé, comprenant :
un boîtier (104) ;
une platine tournante (102) supportée par le boîtier (104), la platine (102) définissant une surface périphérique extérieure ;
une pluralité de noeuds réfléchissants (302) positionnés sur la surface périphérique extérieure ; et,
une pluralité de sources de lumière (114) configurées pour diriger la lumière directement vers les noeuds (302) pour fournir un afficheur de lumière de visualisation,
comprenant en outre un dispositif de commande, le dispositif de commande étant couplé aux sources de lumière (114) pour illuminer de façon commandable la pluralité de sources de lumière (114), dans lequel le dispositif de commande est configurable pour produire différents motifs de lumière à partir de la pluralité de sources de lumière (114).

2. Afficheur selon la revendication 1, dans lequel les noeuds réfléchissants (302) sont construits en au moins l'un d'un métal réfléchissant, d'un verre, d'une céramique, et d'un polymère.

3. Afficheur selon la revendication 1 ou 2, comprenant en outre la commande de la pluralité de sources de lumière (114) de sorte que des sources de lumière (114) adjacentes produisent sensiblement le même type et la même qualité de lumière.

4. Afficheur selon l'une des revendications 1 à 3, comprenant en outre la commande de la pluralité de sources de lumière (114) de sorte que des sources de lumière (114) adjacentes produisent sensiblement un type ou une qualité de lumière différent(e).

5. Afficheur selon la revendication 4, dans lequel le type ou la qualité de lumière différent (e) est au moins l'une d'une source de lumière constante, d'une source de lumière stroboscopique, d'une source de lumière blanche, et d'une source de lumière colorée.

6. Afficheur selon la revendication 5, dans lequel la source de lumière colorée est au moins l'une d'une lumière rouge, verte, et bleue.

7. Afficheur selon l'une des revendications 1 à 6, dans lequel les nombreuses sources de lumière (114) sont des diodes électroluminescentes (DEL).

8. Système de fourniture d'afficheur de visualisation, comprenant :
un tourne-disque (100) ayant un boîtier (104) et une platine, la platine définissant une périphérie extérieure ;
une pluralité de noeuds réfléchissants (302) sur la périphérie extérieure ; et,
une pluralité de sources de lumière (114) pour diriger la lumière directement vers les noeuds réfléchissants (302) sensiblement autour de la totalité de la périphérie extérieure,
le système comprenant en outre un dispositif de commande pour commander la pluralité de sources de lumière (114) dans lequel le dispositif de commande est configurable pour produire différents motifs de lumière à partir de la pluralité de sources de lumière (114).

9. Système selon la revendication 8, dans lequel la pluralité de sources de lumière (114) est configurée pour fournir au moins l'une d'une lumière blanche, d'une lumière rouge, d'une lumière verte, et d'une lumière bleue.

10. Procédé de fourniture d'un afficheur de visualisation, comprenant :
la fourniture d'un tourne-disque (100) ayant une platine tournante (102) définissant une périphérie extérieure sur laquelle se trouve des noeuds réfléchissants (302) ;
la fourniture d'une pluralité de sources de lumière (114) dirigeant une lumière directement dans les noeuds réfléchissants (302) ; et,
la commande des sources de lumière (114) pour produire des motifs de lumière différents à partir de la pluralité de sources de lumière et pour fournir un afficheur de visualisation par la lumière réfléchie par les noeuds réfléchissants (302).

11. Procédé selon la revendication 10, dans lequel la fourniture d'une pluralité de sources de lumière (114) est configurée de sorte que la pluralité de sources de lumière (114) dirige la lumière sensiblement au niveau de la totalité de la périphérie extérieure de la platine.

12. Procédé selon la revendication 10 ou 11, dans lequel la commande des sources de lumière (114) comporte la production par chaque source de lumière (114) de sensiblement la même qualité et la même couleur de lumière.

13. Procédé selon l'une des revendications 10 à 12, dans lequel la commande des sources de lumière (114) comporte la production par chaque source de lumière d'une qualité et d'une couleur de lumière différentes.
